Europäisches Patentamt

European Patent Office

Office européen des brevets

(11) Publication number: **0 092 436**
**B1**

## EUROPEAN PATENT SPECIFICATION

(45) Date of publication of patent specification: **10.08.88**

(21) Application number: **83302240.3**

(22) Date of filing: **20.04.83**

(51) Int. Cl.⁴: **G 07 F 15/00,** G 07 F 7/00

(54) Improved apparatus for the collection of payments for commodities.

(30) Priority: **20.04.82 GB 8211388**

(43) Date of publication of application:
**26.10.83 Bulletin 83/43**

(45) Publication of the grant of the patent:
**10.08.88 Bulletin 88/32**

(84) Designated Contracting States:
**AT BE CH DE FR GB IT LI LU NL SE**

(56) References cited:
**EP-A-0 015 120**
**US-A-4 162 530**
**US-A-4 261 037**

(73) Proprietor: **NORTHERN IRELAND ELECTRICITY SERVICE**
**P.O. Box 2 Danesfort 120 Malone Road**
**Belfast BT9 5HT Northern Ireland (GB)**

(72) Inventor: **Boyd, Ronald Mills**
**59 Belmont Crescent Londonderry**
**County Londonderry Northern Ireland (GB)**

(74) Representative: **Huskisson, Frank Mackie et al**
**FITZPATRICKS 4 West Regent Street**
**Glasgow G2 1RS Scotland (GB)**

Courier Press, Leamington Spa, England.

## Description

The present invention relates to apparatus for use in the collection of payments for commodities such as electricity, gas or other fuels which require a coin or equivalent money token to be inserted to obtain credit for the use of such commodities.

It is particularly but not exclusively envisaged that electricity is the commodity, although any other suitable commodity may be substituted therefore, subject to the criteria that the commodity is passed through a measuring instrument and a signal corresponding to some unit of measurement is displayed.

There are known types of electricity prepayment meters which use signals derived from units from a KWH meter and from coins, and electricity coin collecting devices which use signals from coins and from a timing device. The present device may use signals from units from a KWH meter or meters, from coins and from a timing device.

With those existing types of devices it is difficult for the consumer to assess his average weekly consumption of electricity and therefore to economise. In addition the display is in units of electricity and not costs and in order to calculate average cost numerous readings must be taken at regular intervals and the readings converted into money equivalents. Accordingly, it is considered that such features are disadvantages of known prepayment devices.

EP—A1—0015120 discloses an apparatus for the collection of payments for commodities comprising, metering means for providing a signal indicative of the amount of commodity used, crediting means for providing a signal indicative of credit entered by a user, control means receiving the commodity and credit signals provided by said metering and crediting means for adjusting the total available credit in response to said commodity and credit signals, and display means for displaying information indicating the total available credit. With this apparatus it is difficult for the consumer to assess his average consumption.

It is an object of the present invention to obviate or mitigate the above said disadvantages.

According to the present invention the apparatus is characterised in that said commodity signal represents consumption of a predetermined quantity of the commodity, in that said commodity signals are stored cumulatively by said control means over a first predetermined period of time, the accumulated total at the end of said first period being used to calculate a first average value for the cost of commodity consumption over a second predetermined period of time, said second period being a multiple of said first period, in that a second average value for the cost of commodity consumption over a third predetermined period of time is derived from said first average value, said third period being a fraction of said first period, and said second average value being deducted from the total available credit at the end of each successive third period, and in that said first average value in addition to said total available credit are displayed on said display means.

An embodiment of the present invention will now be described by way of example with reference to the accompanying drawings, in which:

Fig. 1 is a block diagram of the apparatus according to the present invention; and

Fig. 2 is a flow chart of a programme for use with the block diagram of Fig. 1.

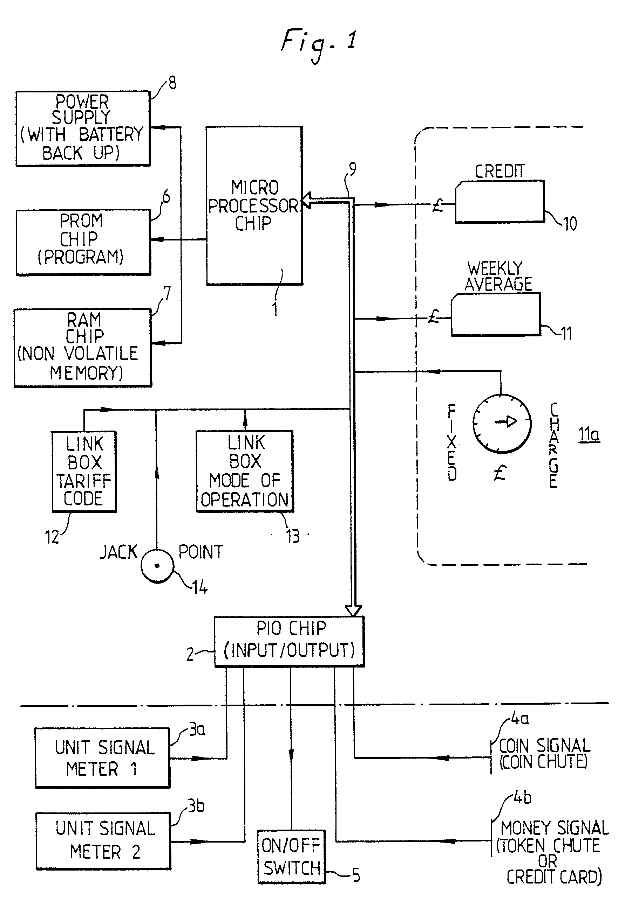

The principal circuit element in Fig. 1 is a microprocessor (MP) 1 which is connected via a peripheral interface input/output (I/O) chip 2 to meters 3a, 3b, to coin or money devices 4a, 4b and to an on-off switch 5. The microprocessor 1 is also connected to a programmable read-only-memory (PROM) 6, a random-access-memory (RAM) 7 and a power supply 8. The power supply 8 includes a battery back-up for the non-volatile RAM 7. Alternatively the PROM 6 and the RAM 7 may be contained in the MP 1.

The microprocessor output is connected via a common bus 9 to; a credit meter and display 10; a weekly average meter and display 11; a fixed charge setting device 11a, a link box tariff code 12 and a link box mode of operation 13.

In use, signals are received by the MP 1 from meters 3a, 3b which are used to measure the electricity and which give output signals corresponding to one unit consumed. These output signals are stored cumulatively under the control of the MP 1 in the RAM 7 to provide a day's (24 hours) total. At the end of a day the cost of the units consumed is calculated and an average value is then calculated and displayed on the meter and display 10.

During the day at suitable time intervals, say one hour, a proportion of the weekly average equivalent to the time unit is deducted from the credit displayed on the meter and display 10. The value of credit displayed is due to signals from either a coin from a coin chute 4a, a signal equivalent to a sum of money from a token coin chute 4b or a device for reading prerecorded credit cards (not shown in the interest of clarity).

When the value of credit displayed on the meter 10 goes negative the power supply is switched off by the MP 1 via the I/O chip 2. Provision is, however, made to allow this value of credit displayed to go negative by a fixed amount. This negative reading must be cancelled by the provision of coins, or other money equivalent, before the power supply is restored. The feature prevents the customer 'feeding' the meter for a period of time during a day and not taking supply at other times.

A means of setting a weekly fixed charge to cover things like arrears, hire purchase or other payment and a proportion of this is taken from the 'credit' displayed on the meter 10 at each time interval during the day.

In this example, provision is made to operate on signals from two meters, although any number of meters is theoretically possible, merely requiring extension of the circuitry and memory capacity.

The device also has provision for a plug-in link box 12 in the form of a dual in line package, which provides the codes to identify the tariffs appropriate to the meters in use. The constants appropriate to these tariffs are read in from a hand held device via a jack plug 14 and are entered on setting up and also when tariffs are changed.

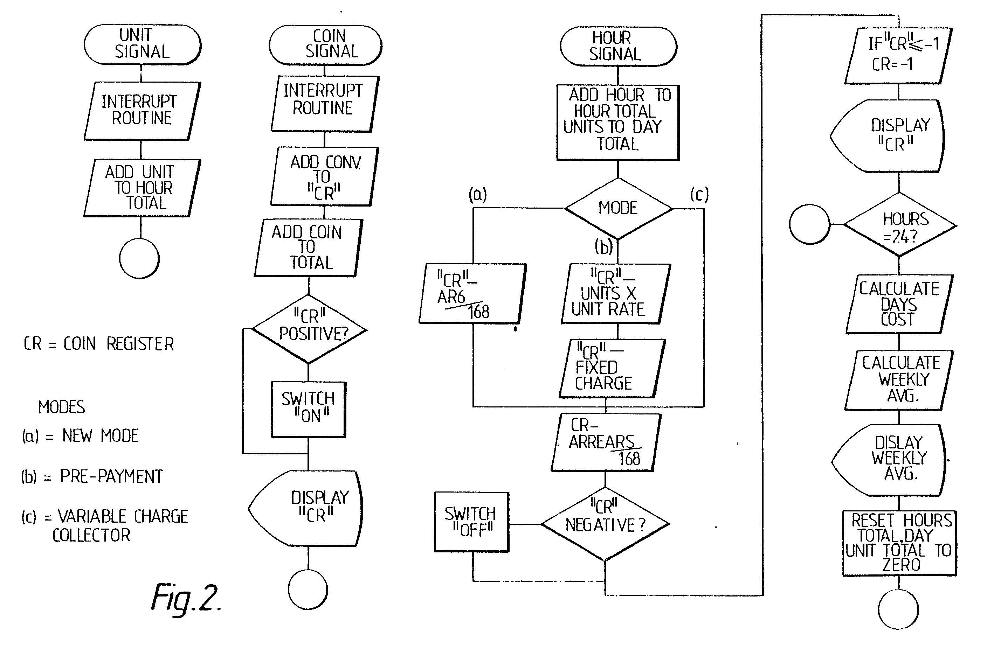

Provision is made to preset the mode of operation for utilising a second plug-in link box 13, the links in this box 13 corresponding to; the mode described above, a prepayment meter mode and a variable charge collection mode. The programme sequences used to operate in these modes are displayed in flow-chart form in Fig. 2.

Advantages of the proposed apparatus are numerous and are listed as follows:

Three modes of operation can be incorporated in a single unit by utilising a preset plug-in link box;

(a) the mode in which the customer puts in money to keep the supply available is based on the average weekly consumption over the previous seven days, this weekly consumption being displayed. The customers can therefore use this information to economise or otherwise on their consumption;

(b) it can operate like a normal prepayment meter in which the units are charged as they are consumed, the display of the weekly average being available to the customer as above;

(c) it can operate like the previous variable charge collection which enables electricity to be available on a time/cost basis. This form of operation depends on an assessment of the annual consumption converted into a weekly rate which is preset on the face of the device. In this mode it operates as an 'annual budgeting' device and the weekly average is displayed for the customer's use.

In the three above cases the input from one, two or more meters at different tariff rates can be accommodated.

The device can also be arranged to accept signals from a coin chute as in present prepayment devices, a token chute where tokens replace coins, and a credit card device where the credit card device accepts prerecorded credit cards and provides a signal appropriate to the sum of money recorded.

A fixed negative bias is provided which can be used to resolve 'feeding' problems in the variable charge collection mode and the collection of fixed charges when the customer is away in modes (a) and (b).

A variable weekly charge can be set to cover things like hire purchase repayment, arrears, etc.

## Claims

1. Apparatus for the collection of payments for commodities comprising metering means (3a, 3b) for providing a signal indicative of the amount of commodity used, crediting means (4a, 4b) for providing a signal indicative of credit entered by a user, control means (1, 6, 7, 8) receiving the commodity and credit signals provided by said metering and crediting means for adjusting the total available credit in response to said commodity and credit signals, and display means (10, 11) for displaying information indicating the total available credit; characterised in that said commodity signal represents consumption of a predetermined quantity of the commodity, in that said commodity signals are stored cumulatively by said control means (1, 6, 7, 8) over a first predetermined period of time, the accumulated total at the end of said first period being used to calculate a first average value for the cost of commodity consumption over a second predetermined period of time, said second period being a multiple of said first period, in that a second average value for the cost of commodity consumption over a third predetermined period of time is derived from said first average value, said third period being a fraction of said first period, and said second average value being deducted from the total available credit at the end of each successive third period, and in that said first average value in addition to said total available credit are displayed on said display means (10, 11).

2. Apparatus as claimed in claim 1 wherein said first period is one day, said second period is one week and said third period is one hour.

3. Apparatus as claimed in claim 1 or claim 2 further including means (5) for interrupting the supply of the commodity if the total available credit falls below a predetermined level.

4. Apparatus as claimed in any preceding claim wherein said control means includes a microprocessor (1), and a random access memory (7).

5. Apparatus as claimed in any preceding claim wherein said crediting means comprises a coin chute (4a) and/or a token chute or credit card device (4b).

6. Apparatus as claimed in any preceding claim, in which first and second plug-in link-boxes (12, 13) provide codes to the control means (1, 6, 7, 8) to identify tariffs appropriate to said metering means (3a, 3b) and for presetting a mode of operation respectively.

## Patentansprüche

1. Gerät zum Kassieren von Zahlungen für Verbrauchsgüter, das Meßgeräte (3a, 3b) zum Leifern eines Signals, das die verbrauchte Menge des Verbrauchsgutes anzeigt, Guthabenvorrichtungen (4a, 4b) zum Liefern eines Signals, das das von einem Benutzer eingegebene Guthaben (Kredit) anzeigt, Kontroll- und Steuervorrichtungen (1, 6, 7, 8), die die von den Meßgeräten und den Guthabenvorrichtungen gelieferten Verbrauchsgüter- und Guthabensignale empfangen, zum Einstellen des gesamten verfügbaren Guthabens durch Ansprechen auf diese Verbrauchsgüter- und Guthabensignale, und Anzeigevorrichtungen (10, 11) zum Anzeigen von Information, die das gesamte verfügbare Guthaben oder den gesamten verfügbaren Kredit anzeigen, umfaßt, dadurch gekennzeichnet, daß das Verbrauchsgütersignal den Verbrauch einer vorherbestimmten Menge des Verbrauchsgutes darstellt, daß die Verbrauchsgütersignale kumulativ von den Kontroll- und Steuervorrichtungen (1, 6, 7, 8) über eine erste vorherbestimmte Zeitperiode gespeichert werden, wobei die aufgesammelte Gesamtsumme an dem Ende der ersten Periode dazu verwendet wird, um einen ersten Durchschnittswert für die Kosten des Verbrauchsgutverbrauchs über eine zweite vorherbestimmte Zeitperiode zu berechnen, wobei diese zweite Periode ein Vielfaches der ersten Periode ist, daß ein zweiter Durchschnittswert für die Kosten des Verbrauchsgutverbrauchs über eine dritte vorherbestimmte Zeitperiode von dem ersten Mittelwert abgeleitet wird, wobei diese dritte Periode ein Bruchteil der ersten Periode ist, und dieser zweite Mittelwert von dem gesamten verfügbaren Guthaben (Kredit) am Ende jeder nachfolgenden dritten Periode abgezogen wird, und daß dieser erste Mittelwert zusätzlich zu diesem insgesamt verfügbaren Guthaben (Kredit) auf den Anzeigevorrichtungen (10, 11) angezeigt wird.

2. Gerät nach Anspruch 1, bei dem die erste Periode ein Tag ist, die zweite Periode eine Woche ist und die dritte Periode eine Stunde ist.

3. Gerät nach Anspruch 1 oder 2, das weiterhin eine Vorrichtung (5) zum Unterbrechen der Versorgung mit dem Verbrauchsgut enthält, wenn das gesamte verfügbare Guthaben bzw. der gesamte verfügbare Kredit unter ein vorherbestimmtes Niveau sinkt.

4. Gerät nach einem der vorhergehenden Ansprüche, bei dem die Kontroll- und Steuervorrichtungen einen Mikroprocessor (1) und einen Speicher mit beliebigem Zugriff (random access memory RAM 7) umfassen.

5. Gerät nach einem der vorhergehenden Ansprüche, bei dem die Guthabenvorrichtungen eine Hartgeldeinwurfvorrichtung (4a) und/oder eine Münz-Chip-Einwurfvorrichtung oder eine Kreditkartenvorrichtung (4b) umfassen.

6. Gerät nach einem der vorhergehenden Ansprüche, bei dem erste und zweite Einschuß-Verbindungsboxen (12, 13) Codes an die Kontroll- und Steuervorrichtungen (1, 6, 7, 8) liefern, um für die Meßgeräte (3a, 3b) entsprechend geeignete Tarife zu identifizieren bzw. eine Betriebsmode voreinzustellen.

**Revendications**

1. Appareil pour le recouvrement de paiements de produits, comprenant des moyens de mesure (3a, 3b) qui fournissent un signal indicatif de la quantité de produit utilisée, des moyens de crédit (4a, 4b) qui fournissent un signal indicatif d'un crédit introduit par l'utilisateur, des moyens de commande (1, 6, 7, 8) recevant les signaux de produit et de crédit fournis par lesdits moyens de mesure et de crédit de manière à corriger le crédit disponible total en réponse auxdits signaux de produit et de crédit, et des moyens d'affichage (10, 11) pour afficher une information indiquant le crédit disponible total; caractérisé en ce que ledit signal de produit représente la consommation d'une quantité prédéterminée du produit, en ce que lesdits signaux de produit sont stockés cumulativement par lesdits moyens de commande (1, 6, 7, 8) pendant une première durée prédéterminée, le total accumulé à la fin de ladite première durée étant utilisé pour calculer une première valeur moyenne du coût de consommation de produit pendant une deuxième durée prédéterminée, ladite deuxième durée étant un multiple de ladite première durée, en ce qu'une deuxième valeur moyenne du coût de consommation de produit pendant une troisième durée prédéterminée est obtenue à partir de ladite première valeur moyenne, ladite troisième durée étant une fraction de ladite première durée, et ladite deuxième valeur moyenne étant déduite du crédit disponible total à la fin de chaque troisième durée successive, et en ce que ladite première valeur moyenne est affichée, en plus dudit crédit disponible total, sur lesdits moyens d'affichage (10, 11).

2. Appareil suivant la revendication 1, dans lequel ladite première durée est d'un jour, ladite deuxième durée est d'une semaine et ladite troisième durée est d'une heure.

3. Appareil suivant la revendication 1 ou la revendication 2, comprenant en outre des moyens (5) pour interrompre la fourniture du produit si le crédit disponible total tombe au-dessous d'une valeur prédéterminée.

4. Appareil suivant l'une quelconque des revendications précédentes, dans lequel lesdits moyens de commande comprennent un microprocesseur (1) et une mémoire vive (7).

5. Appareil suivant l'une quelconque des revendications précédentes, dans lequel lesdits moyens de crédit comprennent une goulotte d'introduction de pièces de monnaie (4a) et/ou une goulotte d'introduction de jetons ou un dispositif à carte de crédit (4b).

6. Appareil suivant l'une quelconque des revendications précédentes, dans lequel une première et une deuxième boîtes de liaison embrochables (12, 13) fournissent des codes aux moyens de commande (1, 6, 7, 8), pour identifier des tarifs appropriés auxdits moyens de mesure (3a, 3b) et pour prédéterminer un mode de fonctionnement, respectivement.

*Fig. 1*

POWER SUPPLY (WITH BATTERY BACK UP) — 8

PROM CHIP (PROGRAM) — 6

RAM CHIP (NON VOLATILE MEMORY) — 7

MICRO PROCESSOR CHIP — 1

9

CREDIT — 10

WEEKLY AVERAGE — 11

FIXED | CHARGE | £ — 11a

LINK BOX TARIFF CODE — 12

LINK BOX MODE OF OPERATION — 13

JACK POINT — 14

PIO CHIP (INPUT/OUTPUT) — 2

UNIT SIGNAL METER 1 — 3a

UNIT SIGNAL METER 2 — 3b

ON/OFF SWITCH — 5

COIN SIGNAL (COIN CHUTE) — 4a

MONEY SIGNAL (TOKEN CHUTE OR CREDIT CARD) — 4b

1

UNIT SIGNAL

INTERRUPT ROUTINE

ADD UNIT TO HOUR TOTAL

---

COIN SIGNAL

INTERRUPT ROUTINE

ADD CONV. TO "CR"

ADD COIN TO TOTAL

"CR" POSITIVE?

SWITCH "ON"

DISPLAY "CR"

---

CR = COIN REGISTER

MODES

(a) = NEW MODE

(b) = PRE-PAYMENT

(c) = VARIABLE CHARGE COLLECTOR

*Fig.2.*

---

HOUR SIGNAL

ADD HOUR TO HOUR TOTAL UNITS TO DAY TOTAL

MODE

(a)   (b)   (c)

"CR" — $\dfrac{AR6}{168}$

"CR" — UNITS X UNIT RATE

"CR" — FIXED CHARGE

CR — $\dfrac{ARREARS}{168}$

SWITCH "OFF"

"CR" NEGATIVE ?

---

IF "CR" $\leqslant$ -1 CR = -1

DISPLAY "CR"

HOURS = 24?

CALCULATE DAYS COST

CALCULATE WEEKLY AVG.

DISLAY WEEKLY AVG.

RESET HOURS TOTAL,DAY UNIT TOTAL TO ZERO